# EUROPÄISCHE PATENTSCHRIFT

(11) **EP 2 290 588 B1**
(45) Veröffentlichungstag und Bekanntmachung des Hinweises auf die Patenterteilung: **06.01.2016**
(21) Anmeldenummer: 10008465.6
(22) Anmeldetag: 13.08.2010
(51) Int. Cl.: G06K 19/07

(54) **Verfahren zum Betrieb eines Transponders für die Radiofrequenz-Identifikation (RFID) und RFID-Transponder**
Method for operating a transponder for radio frequency identification (RFID) and RFID transponder
Procédé de fonctionnement d'un transpondeur pour l'identification à radiofréquence (RFID) et transpondeur RFID

(30) Priorität: 13.08.2009 DE 102009037475
(43) Veröffentlichungstag der Anmeldung: 02.03.2011
(73) Patentinhaber: Identec Solutions AG, 6890 Lustenau (AT)
(72) Erfinder: Feierle, Karlheinz, 6850 Dornbirn (AT); Schedler, Gerhard, 9493 Mauren (LI); Gantner, Reinhold, 6700 Bludenz (AT)
(74) Vertreter: Riebling, Peter

(56) Entgegenhaltungen:
- WO-A1-2007/086130
- WO-A2-2007/024772
- US-A- 5 543 780
- US-A1- 2009 058 653
- US-A1- 2009 231 106

## Beschreibung

Die Erfindung betrifft ein Verfahren zum Betrieb eines Transponders für die Radiofrequenz-Identifikation (RFID) und RFID-Transponder.

Bekannt sind klassische, sogenannte Beacon-Transponder (beacon: engl = Leuchtfeuer), die in einem Broadcast-Modus arbeiten. Der Transponder besitzt einen Datenträger, auf dem statische Daten gespeichert sind. Die Daten auf dem Datenträger werden von dem Transponder kontinuierlich oder in einem programmierbaren Intervall (Ping-Rate) im Rundfunkverfahren (Broadcast) ausgesendet. Dieser Vorgang geschieht völlig automatisch. Der Transponder sendet von sich aus, ohne dass er durch ein Schreib /Lesegerät geweckt werden muss. Er besitzt keinen Empfänger und kann daher nicht aktiv angesprochen werden.

Bei diesem Beacon-Übertragungsverfahren besteht lediglich eine unidirektionale Kommunikation vom Transponder zu einer Empfangseinheit. Es können sich mehrere tausend Transponder in dem Umfeld befinden. Wenn alle Transponder gleichzeitig senden würden, würde das zu einer großen Datenkollisionsrate führen. Um hier eine Datenkollision zu vermeiden, wird über einen Jitterbetrieb die Aussendung der Daten der einzelnen Transponder nicht zu einem fixen Startpunkt ausgelöst, sondern dieser Startpunkt variiert bei jedem Transponder in einem gewissen Rahmen nach dem Zufallsprinzip.

Ein Beacon Transponder hat den Vorteil, das er in vielen, schnell ablaufenden Applikationen einfach seine Information plus evtl. zusätzlicher Daten (kurzer string) überträgt, diese mit hoher Sicherheit erfasst werden kann und die Batterielebensdauer sich exakt berechnen lässt

Im Gegensatz dazu arbeitet ein sogenannter Response-Transponder in einem bidirektionalen Betrieb. Der Transponder besitzt einen eigenen Empfänger, mit welchem er von einer übergeordneten Sende-/Empfangseinheit ausgesendete Daten und Befehle empfangen kann. Eine Aktion oder Aussendung von Daten des Transponders wird in diesem Fall ausschließlich von der übergeordneten Sende-/Empfangseinheit ausgelöst, oder über einen Aufweckbefehl, dem sogenannten "Wakeup".

Durch ihren bidirektionalen Charakter kann man auf diesen bidirektionalen Transponder, sowohl Daten schreiben, wie auch Danten von diesem auslesen. Zusätzlich ist es hier möglich mittels z.B. eines Sensors Umweltdaten aufzunehmen und bezogen auf eine Zeitbasis zu protokollieren. Dadurch ergeben sich viele Anwendungen mit z.B. Geo-Temperatur- Feucht-Datenerfassung, etc.
Um große Datenmengen auslesen zu können braucht es hier jedoch eine gewisse Zeit, welche bei hohen Geschwindigkeiten nicht vorhanden ist.
Man kann zwar auch nur die Identifikationskennung (UID) des Transponders auslesen, jedoch ist auch dieser Prozess bereits umfangreicher und zeitaufwändiger als beim einfachen Beacon-Transponder. Weiterhin ist die Lebensdauer eines Response Transponders von der Anzahl der Abfragen abhängig, die willkürlich gewählt werden kann und somit eine Vorhersage über die Batterielebensdauer nicht möglich ist.

Mit den Druckschriften WO 2007/086130 A1, US 2009/231106 A1 die den nächstliegendeten Stand der Technik bilden, und WO 2007/024772 A2 wird ein Verfahren zum Betrieb eines RFID-Transponders offenbart, wobei der RFID-Transponder entweder in einem Broadcast-Modus oder in einem bidirektionalen Response-Modus oder in beiden vorgenannten Modi gleichzeitig betrieben wird.

Bei allen Ausführungsformen nach dem oben genannten Stand der Technik werden ausschließlich zwei Frequenzen verwendet. Hierbei handelt es sich um die Broadcast-Frequenz und um die Kommunikationsfrequenz. Dies stellt einen wesentlichen Nachteil dar, da in z.B. Europa für verschiedene Frequenzbänder bestimmte Einschränkungen bestehen. Solche Einschränkungen können beispielsweise die Verwendung einer bestimmten Sendeleistung oder bestimmte Doty-Cycles seien.

Es ist die Aufgabe der Erfindung, ein Verfahren zum Betrieb eines RFID-Transponders und einen solchen RFID-Transponder anzugeben, bei denen die oben genannten Vorteile eines Beacon-Transponders und eines bidirektionalen Transponders miteinander vereint, deren Nachteile aber weitgehend vermieden werden.

Diese Aufgabe wird durch ein Verfahren mit den Merkmalen des Anspruch 1 und einen RFID-Transponder mit den Merkmalen des Anspruchs 4 gelöst.

Bevorzugte Ausgestaltungen der Erfindung ergeben sich aus den abhängigen Ansprüchen.

Erfindungsgemäß ist das Verfahren zum Betrieb eines RFID-Transponders **dadurch gekennzeichnet, dass** der RFID-Transponder entweder in einem Broadcast-Modus oder einem bidirektionalen Response-Modus oder in beiden vorgenannten Modi gleichzeitig betrieben wird.

Die Erfindung betrifft also eine Kombination der Technologien, wie sie bei den Beacon-Transpondern sowie Response-Transpondern realisiert werden, wobei beide Technologien gleichzeitig nutzbar gemacht werden.

In einer bevorzugten Ausgestaltung der Erfindung wird für den Betrieb im Broadcast-Modus eine drahtlose Sendeeinrichtung verwendet, die auf einer ersten Frequenz betrieben wird, und für den Betrieb im bidirektionalen Response-Modus eine drahtlose Sende-/Empfangseinrichtung, die auf einer zweiten Frequenz betrieben wird. Diese beiden Frequenzen sind so gewählt, dass sie sich untereinander nicht stören oder beeinflussen. Mit der bidirektionalen Kommunikation lassen sich beispielsweise Parameter des Broadcast-Modus einstellen und dieser Broadcast-Modus per Kommando ein- oder ausschalten. Hierbei kann der Betrieb im Broadcast-Modus durch Befehle gesteuert werden, die während des Betriebs im Response-Modus von einer übergeordneten Sende-/Empfangseinheit übermittelt werden.

Im Broadcast-Modus wird in einem geregelten Zeitintervall beispielsweise eine ldentifikationskennung des Transponders gegebenenfalls zusammen mit weiteren Daten ausgesendet.

Während des Broadcast-Betriebs kann der Transponder, z. B. mittels Sensoren, Umweltdaten erfassen und protokollieren. Diese Umweltdaten können dann entweder im Broadcast-Betrieb übermittelt oder beispielsweise jederzeit im bidirektionalen Response-Modus von einer übergeordneten Sende-/Empfangseinheit auf Anfrage ausgelesen werden. Der bidirektionale Response-Betrieb erfolgt in jedem Fall parallel und gleichzeitig mit dem Broadcast-Betrieb jedoch auf einer anderen Frequenz, wobei der Broadcast-Betrieb aufrechterhalten wird.

Der RFID-Transponder kann auch in einem sogenannten Wakeup-Modus betrieben werden, wobei bei Empfang eines Wakeup-Befehls von einer übergeordneten Sende-/Empfangseinheit entweder der Broadcast-Modus, oder der Response-Modus oder beide Modi aktiviert werden.

Durch den Betrieb im Broadcast-Modus oder im Response-Modus oder aber beiden Modi lassen sich Applikationen generieren, die auf vielen tausend Transpondern basieren, die alle im Broadcast-Modus arbeiteten und innerhalb eines begrenzten geometrischen Gebiets ihre Identifikationskennungen und gegebenenfalls weitere Daten aussenden. Von ausgewählten Transpondern können dann gezielt im Response-Modus weitere Daten angefordert und ausgelesen werden oder diese Transponder mit weiteren Daten beschrieben werden. Daher ergeben sich neue Möglichkeiten für schnelle Applikationen, welche mit einer hohen Batterielebensdauer auch Lese-/Schreib-Zyklen realisieren lassen.

Der erfindungsgemäße RFID-Transponder selbst umfasst in bekannter Weise einen Prozessor, einen Datenspeicher in Form eines Festspeichers und/oder eines wiederbeschreibbaren Speichers sowie eine drahtlose Sendeeinrichtung. Erfindungsgemäß ist eine zusätzliche drahtlose Send-/Empfangseinrichtung vorgesehen, die unabhängig von der erstgenannten Sendeeinrichtung betreibbar ist. Dadurch lässt sich der RFID-Transponder gleichzeitig in zwei verschiedenen Betriebsmodi betreiben, nämlich zum einen in einem Broadcast-Modus, in welchem die drahtlose Sendeeinrichtung aktiv ist und zum anderen in einem bidirektionalen Response-Modus, in welchem die drahtlose Sende-/Empfangseinrichtung aktiv ist.

Der RFID-Transponder umfasst eine Antenne, die als gemeinsame Antenne für die drahtlose Sendeeinrichtung und die drahtlose Sende-/Empfangseinrichtung genutzt werden kann. Für die drahtlose Sendeeinrichtung und die drahtlose Sende-/Empfangseinrichtung können auch zwei separate Antennen vorgesehen werden.

Der Transponder kann ferner Schnittstellen für eine Kommunikation mit der Umwelt enthalten, beispielsweise einen oder mehrer Sensoren zur Erfassung von Umweltdaten sowie einen oder mehrere Aktoren als Ausgabeschnittstellen zur Umgebung oder einem Benutzer.

Wichtig ist, dass die beiden Betriebsmodi, insbesondere der Broadcast-Modus sowie der Response-Modus nicht umgeschaltet werden, sondern gleichzeitig existent sind.

Es werden unterschiedliche Übertragungsfrequenzen und eventuell Übertragungsraten für den Broadcast-Modus und den Response-Modus sowie für den Wakeup-Modus verwendet. Dadurch wird sichergestellt, dass der Broadcast-Modus die Übertragung im bidirektionalen Response-Modus nicht stört und umgekehrt.

Dadurch ergibt sich ebenfalls eine vorteilhafte Nutzung der zugelassenen Frequenzbänder, weil beispielsweise bestimmte Frequenzen unterschiedliche Nutzungsbeschränkungen haben, wie z. B. Sendeleistung, Bandbreite, Duty Cycle etc.. Im Wakeup-Modus ist ein Aufwecken des Broadcast-Modus bzw. bidirektionaler Response-Modus unabhängig voneinander möglich.

Nachfolgend wird die Erfindung anhand eines Ausführungsbeispiels unter Bezugnahme auf die Zeichnungen näher erläutert. Dabei ergeben sich weitere Merkmale und Vorteile der Erfindung.
- Figur 1:: zeigt schematisch eine Anwendung von RFID-Transpondern in einem Applikations-Umfeld
- Figur 2:: zeigt beispielhaft ein Blockdiagramm des Aufbaus eines erfindungsgemäßen RFID-Transponders
- Figur 3:: zeigt beispielhaft ein Blockdiagramm des Aufbaus einer Sende-/ Empfangseinheit zur Kommunikation mit dem erfindungsgemäßen RFID-Transponder

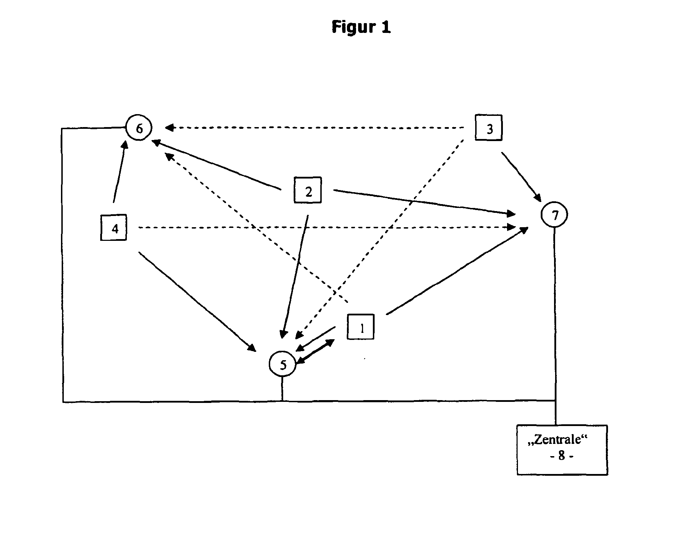

Figur 1 zeigt die Anwendung von erfindungsgemäßen RFID-Transpondern 1, 2, 3, 4 in einem Appliktions-Umfeld. Die RFID-Transponder 1-4 können beispielsweise in der Lagerhaltung verwendet werden, wobei in einem Lagerraum jedem zu lagernden Objekt ein RFID-Transponder eindeutig zugeordnet ist. Jeder RFID-Transponder 1, 2, 3, 4 umfasst eine individuelle und nicht veränderbare Identifikationskennung anhand welcher er identifiziert werden kann. Das jeder Transponder einem Objekt zugeordnet ist, kann anhand der Identifikationskennung auch das Objekt eindeutig identifiziert werden.

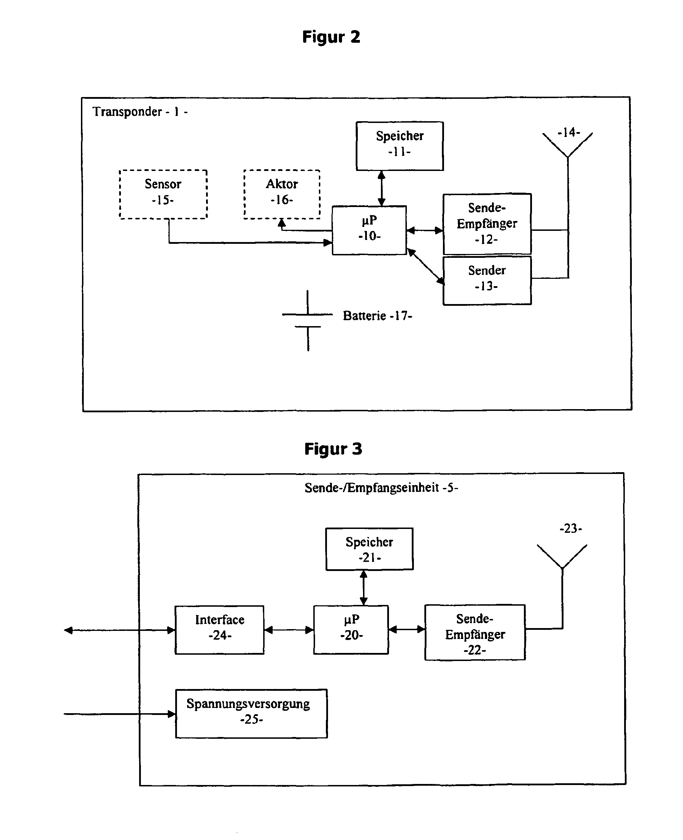

Der Aufbau eines solchen Transponders ist in Figur 2 dargestellt. Der Transponder, beispielsweise der Transponder 1 in Figur 1, umfasst als Herz einen Mikroprozessor 10, der die Steuerung aller Komponenten des Transponders 1 übernimmt. Der Mikroprozessor 10 ist verbunden mit einem Speicher 11, der beispielsweise einen nicht veränderbaren Festspeicher sowie einen wiederbeschreibbaren Speicherbereich aufweisen kann. In dem Speicher 11 ist beispielsweise eine unveränderliche Identifikationskennung abgespeichert, sowie weitere Daten, die beispielsweise das Objekt beschreiben, an welchem der Transponder 1 befestigt ist. Ferner weist der erfindungsgemäße Transponder 1 einen Sender 13 auf, der mit einer Antenne 14 verbunden ist. Des Weiteren ist ein Sende-Empfänger 12 vorgesehen, der ebenfalls mit der Antenne 14 verbunden ist. Der Sendeempfänger 12 sowie der Sender 13 kommunizieren mit dem Mikroprozessor 10. Zur Stromversorgung dient beispielsweise eine Batterie 17. Ferner können Sensoren 15 vorgesehen werden, welche Umweltdaten aufnehmen und diese an den Prozessor 10 weitergeben und im Speicher 11 zwischengespeichert werden. Als Sensoren 15 kommen beispielsweise Temperatursensoren, optische Sensoren, akustische Sensoren usw. in Frage. Außerdem können Aktoren 16 vorgesehen sein, welche vom Mikroprozessor 10 vorgegebene Aktionen ausführen. Die Aktoren können beispielweise Leuchtmittel, Anzeigeeinrichtungen, akustische Aktoren oder elektrische oder mechanische Aktoren sein.

Die RFID-Transponder 1-4 sind beispielsweise in einem Lagerareal verteilt angeordnet und jeweils einem Objekt zugeordnet, und dienen zur Identifikation dieses Produktes. Hierzu werden die RFID-Transponder 1-4 in einem Broadcast-Modus betrieben, in welchem sie permanent in vorgegebenen Zeitabständen über den Sender 13 und Antenne 14 ein Signal aussenden, welches beispielsweise die Identifikationskennung beinhaltet, die im Speicher 11 gespeichert ist. Die ausgesendete Identifikationskennung wird beispielsweise von einer oder mehreren übergeordneten Sende-/Empfangseinheiten 5, 6, 7 empfangen, die verteilt im Lagerareal angeordnet sind.

Der grundsätzliche Aufbau einer Sende-/Empfangseinheit 5, 6, 7 ist beispielsweise in Figur 3 dargestellt. Beispielsweise umfasst die Sende-/Empfangseinheit 5 einen Mikroprozessor 20, der mit einem Speicher 21 kommuniziert. Ferner kommuniziert der Mikroprozessor 20 mit einem Sendeempfänger 22, der mit einer Antenne 23 verbunden ist und über diese Daten drahtlos aussenden und empfangen kann. Über ein Interface 24 kann die Sende-/Empfangseinheit beispielsweise mit externen Einheiten, beispielsweise einer Zentrale 8 oder anderen Sende-/Empfangseinheiten, kommunizieren und von dieser Daten empfangen bzw. an diese Daten senden. Das Interface 24 kann beispielsweise ein drahtgebundenes oder drahtloses Interface sein. Über eine Spannungsversorgung 25 wird die Sende-/Empfangseinheit 5 mit Strom versorgt.

Die RFID-Transponder 1 bis 4 senden also im Broadcast-Modus Signale von relativ kurzer Dauer aus. Diese Signale sind unidirektional und werden häufig und zufällig verteilt ausgesendet. Insbesondere wird die Identifikationskennung zyklisch ausgesendet, oder aber Messwerte, die von dem Sensor 15 aufgenommen werden oder aber andere Statusinformationen, wie z. B. Temperatur, aktuelle Position, Bewegungsinformationen usw. Ferner können im Broadcast-Modus azyklisch bestimmte, den Transponder betreffende Zustände oder Ereignisse ausgesendet werden. Ereignisse sind z. B. Bewegung, Ruheposition, Temperatur über oder unter einer bestimmten Temperaturschwelle, Zustandständerungen von einem Schalter, Transponder passiert einen bestimmten Bereich (Schleuse). Diese Ereignisse werden vorzugsweise mehrfach und mit einer höheren Wiederholfrequenz im Broadcast-Betrieb ausgesendet. Die Aussendung über Broadcast verfügt über einen geeigneten Antikollisionsmechanismus, welche die Kollision mit der Aussendung anderer RFID-Transponder verhindert und reduziert.

Die Broadcast-Aussendungen der Transponder 1-4 werden von den übergeordneten Sende-/Empfangseinheiten 5, 6, 7 empfangen. Die durchgezogenen Pfeile stellen eine Broadcast-Übertragung von den RFID-Transpondern 1 bis 4 zu den Sende-/Empfangseinheiten 5 bis 7 dar. Diese von den RFID-Transpondern ausgesendete Broadcast-Information wird von den Sende-/Empfangseinheiten 5 bis 7 empfangen. Die gestrichelten Pfeile stellen eine Broadcast-Aussendung mit zu geringer Reichweite dar, d. h. die von den RFID-Transpondern 1 bis 4 ausgesendeten Broadcast-Daten können von den Sende-/Empfangseinheiten 5 bis 7 aufgrund zu großer Entfernung nicht empfangen werden.

Die RFID-Transponder 1-4 arbeiten jedoch erfindungsgemäß nicht nur in dem oben beschriebenen Broadcast-Modus, sondern gleichzeitig in einem bidirektionalen Response-Modus, welcher über eine andere Frequenz abgewickelt wird, wie der Broadcast-Modus, damit sich die beiden Modi nicht gegenseitig stören.

Der Response-Modus lässt eine bidirektionale Kommunikation zwischen den RFID-Transpondern 1-4 und den übergeordneten Sende-/Empfangseinheiten 5-7 zu. Hierbei können Daten mit variabler Dauer und variablem Informationsgehalt übertragen werden. Beispielsweise wird von der Zentrale 8 eine Abfrage der im Speicher gespeicherten Daten des Transponders 1 initiiert. Hierbei kann beispielsweise von der nächstliegenden Sende-/Empfangseinheit 5 ein entsprechender Befehl drahtlos an den RFID-Transponder 1 gesendet werden, der ein Auslesen von statischen und dynamischen Daten aus dem Speicher 11 des Transponders 1 initiiert. Der Transponder empfängt den Befehl über die Antenne 14 und den Sende-Empfänger 12 und leitet diesen an den Mikroprozessor 10 zur Auswertung weiter. Der Prozessor 10 liest die angeforderten Daten aus dem Speicher 11 aus. Diese Daten werden dann über den Sendeempfänger 12 und die Antenne 14 an die Sende-/Empfangseinheit 5 übertragen, welche die Daten über die Antenne 23 und den Sende-Empfänger 22 empfängt, an den Mikroprozessor 20 weiterleitet, gegebenenfalls im Speicher 21 ablegt und dann über das Interface 24 an die Zentrale 8 weiterleitet.

In Figur 1 ist durch die Linie mit Doppelpfeil die bidirektionale Kommunikation im Response-Modus zwischen dem RFID-Transponder 1 und der Sende-/Empfangseinheit 5 dargestellt. Die Zentrale 8 wählt jeweils die "beste" Sende-/Empfangseinheit 5 bis 7 für die bidirektionale Kommunikation mit dem betreffenden RFID-Transponder 1 aus. Die Auswahl erfolgt aufgrund von der Signalgüte, beispielsweise größte Feldstärke, bestes Signalrauschverhältnis anhand der von dem RFID-Transponder 1 empfangenen Broadcast-Informationen.

Im Response-Modus können ferner Schreiboperationen von den Sende-/Empfangseinheiten 5 bis 7 in die Speicherbereiche 11 der Transponder 1 bis 4 erfolgen. Es können Speicherbereiche verändert, gelöscht oder anderweitig modifiziert werden. Ferner kann im Response-Modus eine Konfiguration der RFID-Transponder 1-4 erfolgen, z. B. bezüglich Parametern des Broadcast-Modus, wie Pingrate, Alarmschwellen, Programmierung der Sensoren und Aktoren etc. Es können im Response-Modus auch direkt die Aktoren und Sensoren der Transponder 1-4 angesteuert werden.

Schließlich kann noch ein sogenannter Wakeup-Modus vorgesehen sein, der im Wesentlichen ein Teil des Response-Modus ist. In diesem Wakeup-Modus können die jeweiligen RFID-Transponder 1 bis 4 aus einem Ruhezustand aufgeweckt werden bzw. in einen Ruhezustand gebracht werden. Dieses Aufwecken versetzt den jeweiligen RFID-Transponder in einen Zustand, bei dem er dann bereit für die bidirektionale Datenkommunikation ist. Mit einem Wakeup-Befehl kann z. B. ein Zeitpunkt für den Beginn der bidirektionalen Kommunikation übermittelt werden. Ferner können Parameter für die bidirektionale Kommunikation wie Bitrate, Aufweckdauer etc. übermittelt werden. Durch den Aufweckbefehl kann ferner der Broadcast-Modus des RFID-Transponders ein- bzw. ausgeschaltet werden.

### Liste der Bezugszeichen

- 1: Transponder
- 2: Transponder
- 3: Transponder
- 4: Transponder
- 5: Sende-/Empfangseinheit
- 6: Sende-/Empfangseinheit
- 7: Sende-/Empfangseinheit
- 8: Zentrale

- 10: Prozessor
- 11: Speicher
- 12: Sende-/Empfänger
- 13: Sender
- 14: Antenne
- 15: Sensor
- 16: Aktor
- 17: Batterie

- 20: Prozessor
- 21: Speicher
- 22: Sende-/Empfänger
- 23: Antenne
- 24: Interface
- 25: Spannungsversorgung

## Patentansprüche

1. Verfahren zum Betrieb eines RFID-Transponders (1), wobei der RFID-Transponder (1) entweder in einem Broadcast-Modus oder in einem bidirektionalen Response-Modus betrieben wird,
wobei für den Betrieb im Broadcast-Modus eine drahtlose Sendeeinrichtung (13) verwendet wird, die auf einer ersten Frequenz betrieben wird, und für den Betrieb im bidirektionalen Response-Modus eine drahtlose Sende-/Empfangseinrichtung (12) verwendet wird, die auf einer zweiten Frequenz betrieben wird,
**dadurch gekennzeichnet, dass**
der RFID-Transponder (1) in einem Wakeup-Modus auf einer dritten Frequenz betrieben wird,
wobei bei Empfang eines Wakeup-Befehls von einer übergeordneten Sende-/Empfangseinheit der Broadcast-Modus oder der Response-Modus oder der Broadcast-Modus gleichzeitig mit dem Response-Modus im RFID-Transponder (1) aktiviert werden.

2. Verfahren nach Anspruch 1, **dadurch gekennzeichnet, dass** mit dem Wakeup-Befehl ein Zeitpunkt für den Beginn der bidirektionalen Kommunikation übermittelt wird.

3. Verfahren nach einem der Ansprüche 1 oder 2, **dadurch gekennzeichnet, dass** der Betrieb im Broadcast-Modus durch Befehle gesteuert wird, die während des Betriebs im Response-Modus von einer übergeordneten Sende-/Empfangseinheit (5) übermittelt werden.

4. RFID-Transponder (1) mit einem Prozessor (10), einem Datenspeicher (11) und einer drahtlosen Sendeeinrichtung (13), welche für den Betrieb im Broadcast-Modus auf einer ersten Frequenz vorgesehen ist,
wobei eine drahtlose Sende-/Empfangseinrichtung (12) für den Betrieb im bidirektionalen Response-Modus auf einer zweiten Frequenz vorgesehen ist, die unabhängig von der Sendeeinrichtung (13) betreibbar ist,
**dadurch gekennzeichnet, dass**
der RFID-Transponder (1) mindestens einen Sensor (15) und mindestens einen Aktor (16) als Schnittstelle zur Umgebung umfasst und der RFID-Transponder (1) ausgebildet ist in einem Wakeup-Modus auf einer dritten Frequenz betrieben zu werden
wobei bei Empfang eines Wakeup-Befehls von einer übergeordneten Sende-/Empfangseinheit der Broadcast-Modus oder der Response-Modus oder der Broadcast-Modus gleichzeitig mit dem Response-Modus im RFID-Transponder (1) aktivierbar sind.

5. RFID-Transponder nach Anspruch 4, **dadurch gekennzeichnet, dass** eine gemeinsame Antenne (14) für die drahtlose Sendeeinrichtung (13) und die drahtlose Sende-/Empfangseinrichtung (12) vorhanden ist.

## Claims

1. Method for operating an RFID transponder (1), wherein the RFID transponder (1) is operated either in a broadcast mode or in a bidirectional response mode, wherein for operation in the broadcast mode use is made of a wireless transmitting device (13) which is operated on a first frequency, and for operation in the bidirectional response mode use is made of a wireless transmitting/receiving device (12) which is operated on a second frequency,
**characterised in that**
the RFID transponder (1) is operated in a wake-up mode on a third frequency,
wherein on receiving a wake-up command from a higher ranking transmitting/receiving unit the broadcast mode or the response mode or the broadcast mode simultaneously with the response mode are activated in the RFID transponder (1).

2. Method according to claim 1, **characterised in that** a time for the beginning of the bidirectional communication is transmitted with the wake-up command.

3. Method according to one of claims 1 or 2, **characterised in that** the operation in the broadcast mode is controlled by commands which are transmitted by a higher ranking transmitting/receiving unit (5) during operation in the response mode.

4. RFID transponder (1) with a processor (10), a data memory (11) and a wireless transmitting device (13) which is provided for the operation in the broadcast mode on a first frequency,
wherein a wireless transmitting/receiving device (12) is provided for the operation in the bidirectional response mode on a second frequency, which can be operated independently of the transmitting device (13), **characterised in that**
the RFID transponder (1) comprises at least one sensor (15) and at least one actuator (16) as interface with the environment and the RFID transponder (1) is configured to be operated in a wake-up mode on a third frequency , wherein on receiving a wake-up command from a higher ranking transmitting/receiving unit the broadcast mode or the response mode or the broadcast mode simultaneously with the response mode can be activated in the RFID transponder (1).

5. RFID transponder according to claim 4, **characterised in that** a common antenna (14) is present for the wireless transmitting device (13) and the wireless transmitting/receiving device (12).

## Revendications

1. Procédé pour le fonctionnement d'un transpondeur RFID (1), étant précisé que le transpondeur RFID (1) fonctionne soit dans un mode de diffusion, soit dans un mode de réponse bidirectionnel,
étant précisé que pour le fonctionnement en mode de diffusion, on utilise un dispositif d'émission sans fil (13) qui fonctionne sur une première fréquence, et que pour le fonctionnement en mode de réponse bidirectionnel, on utilise un dispositif d'émission/réception sans fil (12) qui fonctionne sur une deuxième fréquence,
**caractérisé en ce que** le transpondeur RFID (1) fonctionne en mode de réveil sur une troisième fréquence,
étant précisé que lors de la réception d'un ordre de réveil à partir d'une unité d'émission/réception supérieure, le mode de diffusion ou le mode de réponse ou le mode de diffusion en même temps que le mode de réponse sont activés dans le transpondeur RFID (1).

2. Procédé selon la revendication 1, **caractérisé en ce qu'**avec l'ordre de réveil est transmis un moment pour le début de la communication bidirectionnelle.

3. Procédé selon l'une des revendications 1 ou 2, **caractérisé en ce que** le fonctionnement en mode de diffusion est commandé par des ordres qui sont transmis par une unité d'émission/réception (5) pendant le fonctionnement en mode de réponse.

4. Transpondeur RFID (1) avec un processeur (10), une mémoire de données (11) et un dispositif d'émission sans fil (13) qui est prévu pour le fonctionnement en mode de diffusion sur une première fréquence,
étant précisé qu'il est prévu un dispositif d'émission/réception sans fil (12), pour le fonctionnement en mode de réponse bidirectionnel sur une deuxième fréquence, qui est apte à fonctionner indépendamment du dispositif d'émission (13),
**caractérisé en ce que** le transpondeur RFID (1) comprend au moins un capteur (15) et au moins un actionneur (16) comme interface avec l'environnement, et le transpondeur RFID (1) est conçu pour fonctionner dans un mode de réveil sur une troisième fréquence,
étant précisé que lors de la réception d'un ordre de réveil à partir d'une unité d'émission/réception supérieure, le mode de diffusion ou le mode de réponse ou le mode de diffusion en même temps que le mode de réponse sont aptes à être activés dans le transpondeur RFID (1).

5. Transpondeur RFID selon la revendication 4, **caractérisé en ce qu'**il est prévu une antenne commune (14) pour le dispositif d'émission sans fil (13) et le dispositif d'émission/réception sans fil (12).
